**Europäisches Patentamt**

**European Patent Office**

**Office européen des brevets**

(19)

(11) Veröffentlichungsnur  er:  **0 155 336**

**A1**

(12) **EUROPÄISCHE PATENTANMELDUNG**

(21) Anmeldenummer: **84103332.7**

(22) Anmeldetag: **27.03.84**

(51) Int. Cl.⁴: **B 01 D 29/14**
**B 01 D 29/42, B 01 D 29/38**
**B 01 D 37/02**

(43) Veröffentlichungstag der Anmeldung:
**25.09.85 Patentblatt 85/39**

(84) Benannte Vertragsstaaten:
**AT BE CH DE FR GB IT LI NL SE**

(71) Anmelder: **Schumacher, Heinz**
**Höperfeld 26**
**D-2050 Hamburg 80(DE)**

(72) Erfinder: **Schumacher, Heinz**
**Höperfeld 26**
**D-2050 Hamburg 80(DE)**

(74) Vertreter: **Glaeser, Joachim, Dipl.-Ing.**
**Dr. M. Kohler, Dipl.-Ing. J. Glaeser Königstrasse 28**
**D-2000 Hamburg 50(DE)**

(54) **Filterkerze.**

(57) Bei einer Filterkerzeneinheit ist das eigentliche Filterelement (13) als Voll- oder Hohlkörper mit glatter Oberfläche
ausgebildet. Eine zentrale Bohrung bildet den Filtratablauf
(18) und nimmt gleichzeitig die Tragestange (15) für den
Füllkörper (13). Auf letzterem ist ein Stützelement (14)
aufgebracht, das seinerseits das Filtergewebe (21) trägt. Die
über (3) in den Trübraum (17) eingepumpte Trübe durchdringt die Schichtenfolge (14, 21) und fließt als Filtrat entlang
der Oberfläche von (13) nach unten in einen Spalt (12) ab.
Hier erfährt das Filtrat eine Erhöhung der Fließgeschwindigkeit und gelangt durch den zentralen Ablauf (18) in den
Filtratraum (18'). Durch die Ausbildung des Spalts (12) wird
der Aufbau von Schmutzpfropfen im unteren Bereich des
Filterelements verhindert. Ausserdem läßt sich nach Beendigung der Filtration im Spalt (12) und im Ablauf (18)
stehendes Filtrat durch Druckgasbeaufschlagung über (4)
ohne Restanteile austreiben.

Fig.3

## Filterkerze

Die Erfindung betrifft einmal eine Filterkerze mit zentrisch angeordnetem Filtratablauf sowie in weiterer Ausgestaltung einer
solchen Filterkerze die Anordnung eines Abstandshalters oder
Füllkörpers, der nach innen den zentrisch angeordneten Filtratablauf begrenzt und nach außen mit dem Stütz- und/oder Filtergewebe belegt ist und eine glatte, das Filtrat nicht durchlassende
Oberfläche aufweist.

Filterkerzen enthalten im allgemeinen als Grundkörper ein perforiertes Metallblech, das zu einem Zylinder geformt ist und auf
dessen äußerer Wandung, ggf. über ein Stützgewebe, ein oder mehrere Lagen Filtergewebe aufgezogen sind.

Auf dieser Mehrfachunterlage kann dann im sogenannten Anschwemmprozess ein Filterhilfsmittel oder auch die abzuscheidende Verunreinigung der Trübe als sogenannter Filterkuchen aufgebaut
werden.

Die Verwendung von Filtergeweben, z.B. Papier, Vlies, Filz, Kunstfasern usw. in Glatt- oder Faltenauflage richtet sich nach der
Art und Konzentration der zu filtrierenden Trübe, sodaß gelegentlich auf den Einsatz von Filtergeweben auch ganz verzichtet werden kann.

Von besonderer Bedeutung ist bei allen Filterkerzen eine gute und
gleichmäßige Verteilung der Trübe auf die verfügbare Filteroberfläche, sowie ein optimal klarer Ablauf des Filtrats.

Mehrfachumwälzung des Filtrats durch das gleiche Filter oder durch
nachgeschaltete Filter sind wirtschaftlich nur bedingt vertretbar und sollten nach Möglichkeit durch geeignete Auswahl der Konstruktion des Filterelements, der Oberflächenbeschaffenheit, der Auswahl des Filtergewebes oder des Filterhilfsmittels usw. ausgeschaltet werden.

Ein entscheidender Vorteil der Filterkerze ist neben ihrer meist einfachen Konstruktion und damit preisgünstiger Herstellung die Ausbildung bzw. Verfügbarmachung großer Filterflächen (über 300 m$^2$ je Einheit) auf kleinstem Raum, wobei eine Vielzahl von Kerzen in einem Filterkessel (der die Trübe aufnimmt) an Trageplatten aufgehängt oder -umgekehrt- auf derartigen Platten aufgesetzt werden können.

Filterkerzen werden bevorzugt als Druckfilter betrieben, d.h., die Trübe trifft unter Druck, bevorzugt dem fördernden Pumpendruck, auf die Filteroberfläche und gelangt nach passieren derselben als Filtrat in den inneren Kerzenablauf.

Es versteht sich, daß die Kerzen nach bestimmten Zeitabständen oder z.B. in Abhängigkeit vom Aufbau des Filterkuchens gereinigt werden müßen, um eine gleichbleibende optimale Filtrationswirkung aufrecht zu erhalten. Diese Reinigung erfolgt insbes. durch Rückspülung bzw. durch Kuchenabstoß mittels Druckluft in entgegengesetzter Richtung zur Filtration, d.h. aus dem Innenraum der Kerze durch das Stütz- bzw. Filtergewebe in den Trübraum des Filterkessels.

Bei der Filtration von sehr feinteiligen und schleimigen Trüben wird im allgemeinen das Prinzip der Anschwemmfiltration praktiziert, wobei entweder durch Mehrfachumwälzung die Trübstoffe selbst das filtrierende (und den Filterkuchen bildende) Element auf der Filteroberfläche bilden, oder es wird mittels eines Filterhilfsmittels, das der Trübe vor Filtrationsbeginn zugesetzt wird, der erforderliche Filterkuchen aufgebaut.

Der Aufbau des Filterkuchens, d.h. die zeitliche Ausbildung desselben und seine Filtrationseffizienz, bestimmt in erheblichem
Maße die Wirtschaftlichkeit und Wirkung der Filterkerze, d.h.
Klarheit des Filtrats und Geschwindigkeit der Filtration, oder
mit andern Worten, Erreichung höchstmöglicher Klarheit des Filtrats
in kürzester Zeit.

Im allgemeinen ist der Aufbau von Filterkerzen derart, daß das
im Kerzeninnern angesammelte Filtrat über ein in das Kerzeninnere
einmündendes Steigrohr (Auslaufrohr für Filtrat) und ein dieses
bzw. mehrere dieser aufnehmendes Sammelrohr abgezogen wird, wobei
dieses Steigrohr meist wenig unterhalb der oberen Begrenzung der
Kerze bzw. einer Trageplatte endet, sodaß der Inhalt der Kerze
während der Filtration mit Filtrat gefüllt ist.

Dabei hat es sich gezeigt -und dies ist ein entscheidender Nachteil nahezu aller Filterkerzenkonstruktionen- daß sich am Boden
der Kerze allmählich ein Belag, eine Schicht, oder ein Pfropfen
aus Trüb- bzw. Feststoffschlamm aufbaut, dessen Volumenzunahme
erst zur Ruhe kommt, wenn die Filterfläche nur noch klares Filtrat hergibt.

Diese Ausbildung eines Trübstoffbelags am Boden der Kerze ist
insbesondere dann nie zu vermeiden, wenn nach dem Prinzip der
Mehrfachumwälzung und/oder Anschwemmung gearbeitet wird, da hierbei
stets zunächst Trübstoffe und evtl. Filterhilfsmittel das Filter

- 4 -  0155336

passieren und zwar solange, bis -wie bereits gesagt- der Belag auf der Filteroberfläche aufgrund seiner Beschaffenheit nur noch blankes Filtrat durchläßt.

Da aber auch blankes Filtrat nach dem Durchtritt durch die Filterfläche den Schmutzpfropfen am Boden der Kerze passieren muß -zumin-

dest wird die Grenzfläche des Schmutzes am Kerzenboden vom klaren Filtrat berührt und aufgewirbelt- gelangen immer wieder Schmutz-

bzw. Trübe-Partikel in das Filtrat, sodaß dieses, obwohl zunächst blank, wieder angetrübt wird.

Beim anschließenden Rückspülen mit Waschlösung behält der Belag auf dem Boden der Kerze seine Form meist bei, zumindest wird er nie ganz beseitigt, sodaß auch nach der sogenannten Reinigung der Kerze (Rückspülung, Entleerung durch Druckluft, Kuchenabtrag

durch Druckluft usw.) beim nächsten Filtrationsvorgang erneut unsauberes Filtrat erhalten wird, obwohl alles getan wurde, die Filteroberfläche für ein einwandfreies, d.h. blankes Filtrat vorzubereiten.

Im Rahmen von Untersuchungen über die Verbesserung der Filtrationseffizienz von Kerzenfiltern, insbesondere im Hinblick auf die unerwünschte Ausbildung des beschriebenen Schmutzbelags am Boden der Kerze, d.h. im sogenannten toten Bereich, hat es sich gezeigt,

daß die Ausbildung des Schmutzbelags praktisch vollkommen unterbunden werden kann, sodaß schon nach kurzer Filtrationszeit ein absolut blankes Filtrat erhalten wird, dessen Klarheit sich während des gesamten Filtrationsprozesses nicht verschlechtert.

Gegenstand der Erfindung ist somit eine Kerzenfiltereinheit, bestehend aus dem eigentlichen Filterbehälter (Trübekessel), dem vorwiegend im unteren Bereich desselben angeordneten Trübezulauf, der eigentlichen Filterkerze (Kerzen) mit in bekannter Weise aufgebauter Oberfläche aus perforiertem oder gelochtem Behältermaterial, Stütz- und ggf. Filtergewebe, geschlossenem Unter- und Oberteil und im Innern der Kerze (Kerzen) vorwiegend zentral angeordnetem Auslaufrohr für das Filtrat, Sammelrohr für den Filtratauslauf aus den einzelnen Kerzen, vorwiegend im oberen Bereich des Filterbehälters angeordnetem Anschluß für Spül- oder Waschmedium (für Gegenstromspülung) und/oder für ein insbesondere gasförmiges Druckmedium (Druckluft) für die Austreibung von Restfiltrat in der Kerze (Kerzen), Trocknung und Abtrennung des Filterkuchens auf der Kerzenoberfläche, wobei erfindungsgemäß das zentral angeordnete Auslaufrohr (Steigrohr) bis nahezu zum Boden der Kerze (Kerzen) reicht und dabei zwischen seinem Ende und dem Boden der Kerze einen Spalt ausbildet, dessen Höhe von wenigen mm bis max. 5 cm, bei einer Kerzenlänge von etwa 150 - 250 cm, reicht.

In einer besonders vorteilhaft gestalteten Ausführungsform ist das zentrale Auslaufrohr vertikal verschiebbar angeordnet, sodaß der Abstand zwischen Kerzenboden und Unterkante Auslaufrohr, d.h. die Spalthöhe, variiert werden kann.

Mit einer derart einfachen Anordnung gelingt es, die Ausbildung des Trübstoffbelags bzw. Trübstoffpfropfens auf dem Boden der Kerze auszuschalten oder -was bei Anwendung der Erfindung nur selten der Fall ist- sollte sich ein derartiger Trübstoffpfropfen trotzdem einmal absetzen, was in Abhängigkeit von der Natur des Trübstoffmaterials und der Fließgeschwindigkeit der zu filtrierenden Flüssigkeit gelegentlich möglich ist, so wird dieser beim anschließenden Rückspülen bzw. bei Druckbeaufschlagung zwecks

0155336

Entleeren des Filters, Trocknen des Filterkuchens und Abtrennung desselben, mit dem im Filter vorhandenen Restfiltrat vollkommen ausgetragen.

Gemäß einer weiteren Ausführungsform der erfindungsgemäßen Filterkerze ist das zentrale, bis zum Boden unter Ausbildung eines Spalts reichende Filtratauslaufrohr als Füllkörper gestaltet. Dies bedeutet, daß anstelle des dünnwandigen Rohrs ein Dickkörper vorgesehen ist, der gleichzeitig die äußere Wand der Kerze darstellt. Auf dieser Füllkörperwand ist das eigentliche Stützgewebe und ggf. das Filtergewebe aufgelegt, während der Füllkörper -im Gegensatz zum bisherigen Aufbau der Oberfläche des Filters- glatt und ohne Durchlässe -Perforation usw.- ausgestaltet ist.

Das Stützgewebe ist im Abstand von der Oberfläche des Füllkörpers gehalten, sodaß das Filtrat im engen Hohlraum zwischen Stützgewebe und Füllkörperoberfläche entlang der letzteren nach unten fließt und durch den flächig ausgebildeten Spalt zwischen Füllkörper und der Bodenhalterung für den Füllkörper unter Erhöhung der Fließgeschwindigkeit in den zentralen Füllkörper-Hohlraum gelangt, in diesem ansteigt und austritt.

Auch bei dieser Konstruktion gelingt es, die Ausbildung des eingangs erwähnten Belags auf dem Boden der Kerze zu verhindern. Beim Rückspülen bzw. Entleeren des zentralen Hohlraums, der also ebenfalls als Filtratauslaufrohr wirkt, wird erneut im Spalt zwischen unterer Füllkörperfläche und Bodenhalterung der Kerze eine Beschleunigung der Spülflüssigkeit erreicht und/oder des gasförmigen, den Filterkuchen im Gegenstrom trocknenden
und abdrückenden Druckmediums, wodurch nicht nur die Filtratsäule im zentralen Hohlraum schnellstens ausgedrückt wird,
sondern auch evtl. am Boden, d.h. im Spalt angesammelter
Schmutz die Kerze verläßt.

Auch in diesem Falle kann der Füllkörper vertikal beweglich
angeordnet sein, sodaß der besagte Spalt verkleinert oder vergrößert werden kann.

Der Füllkörper kann darüberhinaus sowohl als Vollkörper als
auch hohl ausgebildet sein, wobei er im letzteren Falle, wie
der Vollkörper, völlig geschlossen ist, jedoch ein geringeres
Gewicht aufweist.
Der Umfang des Füllkörpers bzw. sein Durchmesser bestimmen
bei gegebener Spalthöhe die Kapazität des Filters (Filterfläche) und die Geschwindigkeit der Filtration, d.h. auch den
Ablauf des Filtrats in der Zeiteinheit.

Die DE-A-24 51 074 beschreibt bereits eine Filtriervorrichtung mit Rückspül-Druckkammern, bei der innerhalb eines Filterbehälters (Trüberaum) ein flüssigkeitsdurchlässiges Filterelement vorgesehen ist, das den Filterbehälter in einen Zuführraum und einen Filtratraum unterterteilt. Dabei ist das Filterelement als vertikaler, unten geschlossener Rohrstutzen ausgebildet, der insgesamt bis in den unteren Bereich des Filterbehälters eintaucht. Ein zentrales Innenrohr mit Ablaufstutzen
liegt hier nicht vor.

Die DE-A-27 41 639 betrifft einen Filtrationsapparat, bei dem
ein Stützrohr im Innern des eigentlichen Filterelements vorgesehen ist. Dieses Stützrohr, das am unteren Ende durch eine Siebplatte verschlossen ist, hat die Aufgabe, zusammen mit einem äußeren Filterschlauch einen Hohlraum entlang der Filteroberfläche auszubilden, der mit körnigem Material, das als Stützkörper fungiert, gefüllt ist. Hierdurch wird ein Zusammendrücken des Filterschlauchs bei der Druckfiltration von außen nach innen verhindert. Durch das abschließende Sieb am unteren Ende des Stützrohrs wird einem Eindringen von körnigem Stützkörpermaterial in das Stützrohr begegnet.

Es handelt sich also hier um ein Schlauchfilter, das mit körnigem Material gefüllt ist, wobei letzteres entweder das gesamte Volumen des Schlauchs ausfüllt oder -durch das Stützrohr- nur einen äußeren Bereich des Innern des Schlauchfilters einnimmt.

Zum Stand der Technik gehört auch die DE-A-32 12 316, die einen Filtrierapparat vorwegnimmt, bei dem mittels Trennwand ein Trübe- und ein Filtratraum geschaffen werden, wie dies bei vielen andern Filterkonstruktionen der Fall ist. An der Trennwand sind in üblicher Weise die Filterkerzen (hängend) befestigt. Sie weisen ein sogenanntes Steigrohr auf, das im Filtratraum, d.h. oberhalb der Trennwand endet. Nach unten reicht das Steigrohr relativ tief in die Kerze hinein, ohne daß unter Ausbildung eines echten Spalts im Sinne der Erfindung der Boden der Kerze nahezu erreicht wird.

Auch liegt kein Hinweis darübervor, daß beim Rückspülen oder bei Gegenstromdruckbeaufschlagung -beide Verfahrensstufen werden auch nicht angestrebt aufgrund der Gesamtkonzeption der Anlage- das Restfiltrat in der Kerze bzw. im Steigrohr einschließlich eines evtl. gebildeten Schmutzpfropfens ausgetragen werden. Die Anlage

**0155336**

arbeitet mit Hilfe von Klopfmechanismen und einer Trocknungsgasführung, die aus dem Trübraum durch den Filterkuchen in
das Steigrohr im Innern der Kerze erfolgt, also nicht das Gegenstromprinzip (zur Trübeführung) aufweist.

Die Erfindung und weitere bevorzugte Ausführungsformen derselben, wird nachfolgend unter Bezugnahme auf die Figuren 1 - 8
näher erläutert.

Es zeigen:

Fig.1 in schematischer Darstellung den Aufbau eines bisher vorwiegend betriebenen Kerzenfilters, das also nicht zum Gegenstand der Erfindung gehört;

Fig.2 ebenfalls in schematischer Darstellung den Aufbau einer
ersten Ausführungsform des Kerzenfilters gemäß der Erfindung;

Fig.2a eine zweckmäßige Weiterbildung des Filters nach Fig.2;

Fig.3 im Schnitt eine besonders vorteilhafte Ausführungsform
des Filters gemäß der Erfindung;

Fig.4 im Schnitt IV-IV das Filter gemäß Fig.3;

Fig.5 eine zweckmäßige Ausgestaltung des eigentlichen Filterkörpers nach Fig.3 und 4 in senkrechtem und horizontalem Schnitt;

Fig.6 eine weitere zweckmäßige Ausgestaltung des eigentlichen
Filterkörpers nach Fig. 3 und 4 in senkrechtem und horizontalem Schnitt;

Fig.7 die Möglichkeit der Ausbildung des Bodenspalts des Füll-
bzw. Filterkörpers nach Fig. 3 und 6;

Fig.8 den Aufbau der eigentlichen Filterzone bei Verwendung des Filter- bzw. Füllkörpers gemäß der Erfindung nach Fig.

1 - 7.

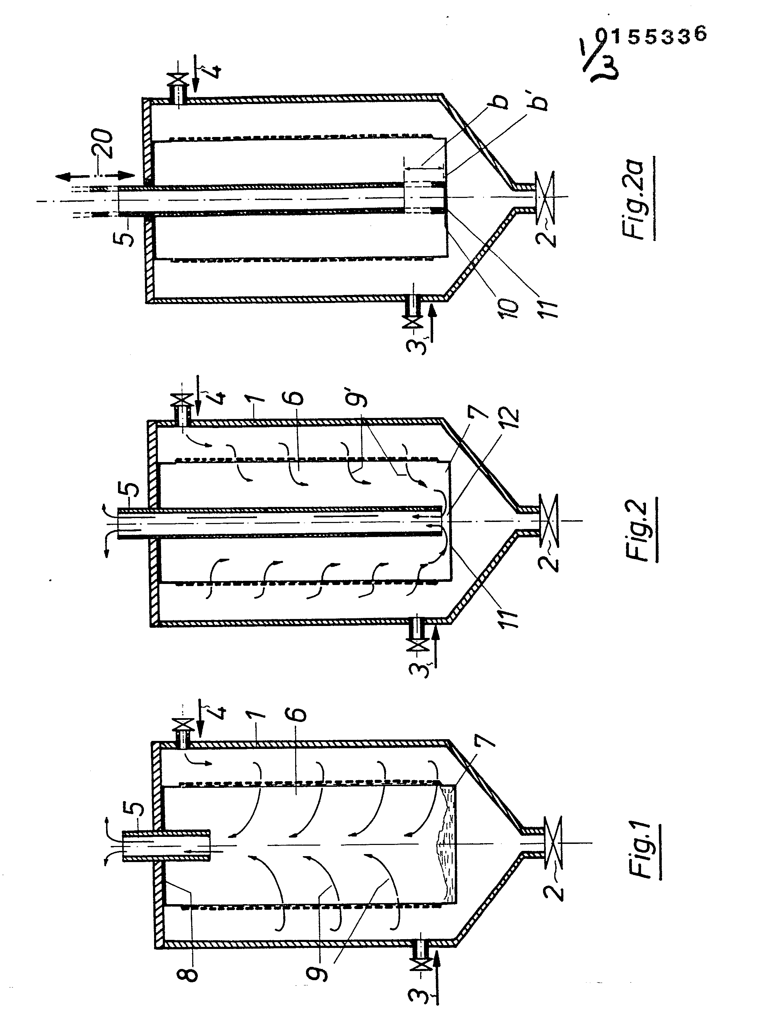

Wie Fig. 1 zeigt, befindet sich im sogenannten Trübekessel (1) mit Trübezulauf (3), Filtratablauf (5), Einlaß (4) für Spül-und/oder Trockenmedium und Austrag (2) für den vom Filter abgetrennten Filterkuchen die eigentliche Filterkerze (6), die in bekannter Weise aus dem gelochten bzw. perforierten Kerzenelement mit Stützauflage, Filtermittelauflage usw. besteht und oben (8) sowie unten (bei 7) geschlossen ist. Dieser Aufbau ist allgemein üblich und gehört zum Stand der Technik, betrifft also nicht die Erfindung.

Wie bereits eingangs abgeleitet, baut sich bei solchen Systemen im Verlauf des Filtrationsvorgangs sehr bald ein Bodenbelag (7) aus Trübematerial (Feststoff; Schlamm) auf, da der Innenraum der Kerze (6) stets mit Flüssigkeit gefüllt bleibt und am Boden sich eine stehende Säule aufbaut, aus der heraus sich feste Trübstoffpartikel am Boden absetzten.

Umgekehrt führt aber auch die Rückspülung (Wäsche des Filterkuchens) im Gegenstrom sowie die Trocknung des Kuchens etwa mit heißer Druckluft, beide eingespeist über Anschluß (4), nicht zum Austrag des Bodenbelags bei (7), da der Strömungsverlauf gemäß Pfeile (9) weder während des Filtriervorgangs noch während des Rückspül- bzw. Trockenvorgangs den Bodenbereich bei (7) erfasst.

Somit verbleibt bei diesem System stets ein Schmutzpfropfen auf dem Kerzenboden erhalten, der immer wieder Anlaß zur Eintrübung des zunächst klaren Filtrats gibt.

Wie bereits gesagt, ist es eine der Hauptaufgaben der Erfindung,
die Ausbildung des Schmutzpfropfens am Boden der Filterkerze(n)
zu verhindern und damit nachträgliche Eintrübung des zunächst
klaren Filtrats zu eliminieren.

Dies erfolgt im einfachsten Falle mit den Maßnahmen, die in
Fig. 2 und 2a dargestellt sind.

Dabei entspricht die Anordnung bzw. der Aufbau im wesentlichen
demjenigen nach Fig.1 mit der primären Ausnahme, daß der Filtratablauf (5) zentral bis nahezu zum Boden der Kerze geführt ist,
und mit seiner unteren Kante zum Kerzenboden (11) einen Spalt
(12) ausbildet, innerhalb dessen das Filtrat eine Geschwindigkeitserhöhung erfährt, die die Ausbildung von Bodenbelag durch
sedimentierte Trübstoffpartikel im Bereich (7) des Kerzenunterteils verhindert.

Zusätzlich wird bei der Rückspülung bzw. Filterkuchentrocknung
durch gasförmiges Trockenmedium, das über (4) eingeleitet wird,
gemäß dem durch Pfeile (9') beschriebenem Weg der Spalt (12)
gereinigt -sofern es doch gelegentlich zur Ausbildung eines Bodenbelags gekommen ist- und in der Kerze (6) bzw. im Rohr (5)
stehendes Filtrat vollkommen ausgetrieben.

Es hat sich im Verlaufe der Untersuchungen über den verbesserten Filterkerzenaufbau gezeigt, daß es besonders vorteilhaft
ist, wenn gemäß Fig.2a das Rohr (5) in der Vertikalen verschiebbar angeordnet ist, sodaß der Spalt (12) bzw. der Abstand (b,b')
der Unterkante des Filtratablaufs (Rohrs) (5) vom Boden (11)
der Kerze (6) in seiner Höhe (vergl. auch Pfeil (20) verändert
werden kann. Je näher die Unterkante (10) des Rohrs (5) an den
Boden (11) heranrückt, umso größer ist die Geschwindigkeit des Filtratablaufs, und als Folge hiervon, umso geringer ist die Möglichkeit des Aufbaus von Feststoffbelag auf dem Boden (11). Ausserdem kann es zweckmäßig sein, daß der Spalt (12) bei der Filtration eine andere Höhe (b, bzw. b') aufweist als bei der späteren Rückspülung und Kuchentrocknung im Gegenstrom. Im übrigen ist die Arbeitsweise gemäß Fig.2a identisch mit derjenigen in Fig.2, d.h., das Rückspülmittel bzw. das Trockenmedium, beispielsweise erhitzte Luft, werden im Gegenstrom zur Filtrationsrichtung geführt und über (4) eingelassen und durch das zentrale Rohr (5) abgeführt. Zur völligen Trocknung und Abtrennung des Filterkuchens ist natürlich eine andere Führung des Trockenmediums erforderlich, die aus dem Filtratraum durch den Kuchen in den Trüberaum führt.

Es sei noch darauf hingewiesen, daß in den Figuren 1, 2 und 2a jeweils nur eine Kerze im Trübraum dargestellt ist, die über eine geeignete Trennplatte (hier Deckplatte des Trübekessels 1) zum -nicht gezeigten- Sammelrohr weiterleitet. In der Praxis werden selbstverständlich mehrere bzw. eine Vielzahl von Kerzeneinheiten im Trübekessel vorhanden sein, für die aber das vorstehend Gesagte unverändert gilt.

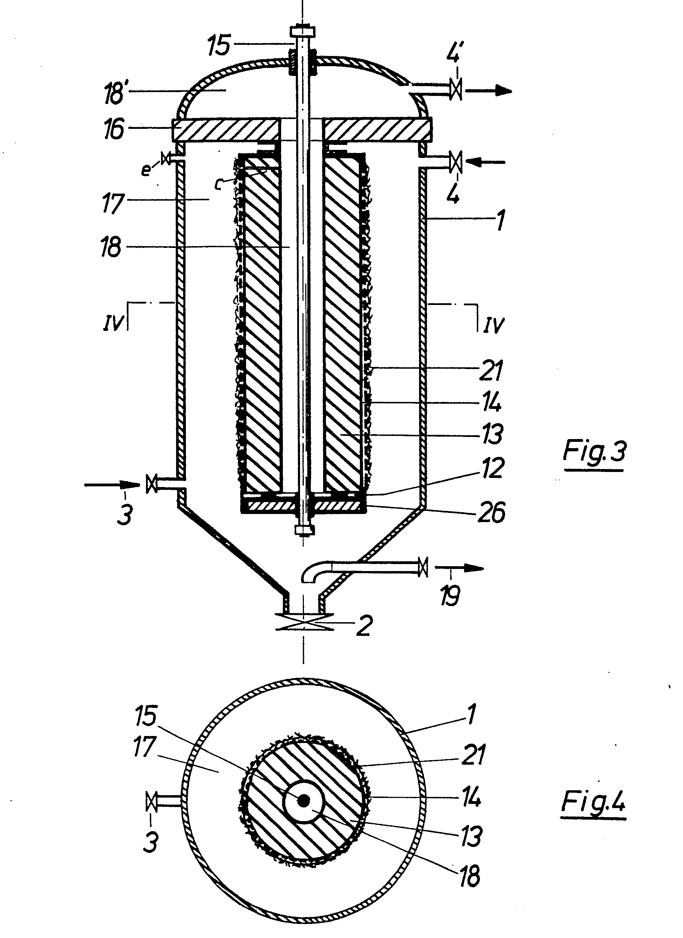

Eine weitere Ausführungsform der erfindungsgemäßen Filterkerze zeigen die Figuren 3 und 4. Bei dieser Konstruktion ist das zentrale Rohr (5) -vergl. Figuren 1, 2 und 2a- als dickwandiger Füllkörper (13) ausgebildet, dessen zentraler Innenraum (18) das sogenannte Filtratablaufrohr bildet und dessen Wandung weder eine Perforierung noch eine sonstige Lochung aufweist.

0155336

Der Füllkörper (13) bildet dabei die Oberfläche der eigentlichen Filterkerze, ohne daß er selbst in den Filtrationsprozeß -etwa wie die durchlochte Kerze (6) in Figuren 1 und 2- eingreift.

Der Füllkörper (13) ist bevorzugt zylindrisch ausgebildet, obwohl -wie später gezeigt wird- auch andere geometrische Formen möglich sind. Der Füllkörper wird in bekannter Weise über eine zentrale Stange (15) mit entsprechenden Lagern, Dichtungen und Verstelleinrichtungen -nicht gezeigt- gehalten.

Die Filtervorrichtung nach Figuren 3 und 4 (Fig.4 zeigt einen Schnitt nach IV-IV gemäß Figur 3) besteht zunächst ebenfalls aus dem Trübekessel (1) mit Trübezulauf (3), Trüberaum (17), Filtratraum (18'), Trageplatte (16), Filtratablauf (4') und Einlaß (4) für Spülmedium und (gasförmigem) Trockenmedium, insbesondere Heißluft.

Wie aus Fig.3 hervorgeht, bildet der Füllkörper (13) mit der unteren Abstützung oder einer andern, geeigneten Bodenverschlußplatte (26), die natürlich beim Übergang zum Füllkörper (13) entsprechend abgedichtet ist, einen Spalt (12), der, wie in Fig.2, 2a beschrieben, die Aufgabe hat, die Geschwindigkeit des durch (18) abfließenden Filtrats zu erhöhen und dadurch die Ausbildung von Bodenbelägen zu verhindern.

Der Füllkörper (13) ist nicht gelocht, sondern weist eine glatte Oberfläche auf. Er entspricht damit in seiner Funktion weitgehend dem Rohr (5) gemäß Fig.2, 2a. Darüberhinaus bildet seine Oberfläche jedoch gleichzeitig die eigentliche Fläche einer nicht-gelochten Filterkerze. Dies bedeutet, daß -vergl. Fig.8-

0155336

der Zwischenraum (25) zwischen der Oberfläche des Füllkörpers
(13) und den Stützelementen bzw. Abstandshaltern (14) für das
Filtergewebe (21) den eigentlichen Filtrat-Ablaufraum bildet,
durch den klares Filtrat entlang der Wand des Füllkörpers nach
unten in den Spalt (12) gelangt und -hier eine erhöhte Geschwindigkeit und ggf. auch Turbulenz erfahrend- durch die zentrale
Bohrung (18) in den Filtratraum (18') eintritt, um über (4')
auszutreten.

Es versteht sich, daß es bei diesem Vorgang im Spalt (12) nicht
zu Ablagerungen von Schmutz und Trübstoffen kommen kann, da
die Höhe des Spalts so bemessen wird, daß das Filtrat bei kürzester Verweilzeit (höchster Geschwindigkeit) den Spalt passiert.

Der Ordnung halber sei darauf verwiesen, daß dieser Vorgang
unter Flüssigkeitsdruck (z.B. Pumpendruck) über (3) und Trüberaum (17), Zwischenraum (25) -vergl. Fig.8- Spalt (12), Bohrung
(18) und Filtratraum (18') abläuft und die Ausbildung eines
evtl. Schmutzpfropfens bzw. Trübstoffbelag -wenn überhaupt- nur
zu Beginn des Filtrationsvorgangs zu erwarten ist, wenn das Filtermaterial (21) noch keine ausreichende Dichtheit besitzt.

Nach beendetem Aufbau des Filterkuchens -nicht dargestellt- auf
dem Abstands-, Stütz- und Filtermaterial (14,21) -erkenntlich
am Druckanstieg der Pumpe oder einer andern Technologie- d.h.
nach abgeschlossenem Filtrationsprozess, ist in bekannter Weise
eine Rückspülung (Kuchenwäsche), Trocknung des Filterkuchens
und seine Abtrennung von der Filteroberfläche erforderlich, um
einen neuen Filtrationsvorgang einleiten zu können.

Zur Rückspülung  erfolgt zunächst die möglichs vollkommene Entleerung des Trüberaums (17) über Leitung (19). Dieser Vorgang ggf. durch Druckluft über Leitung (4) bei geschlossenen Leitungen (3,2,4') unterstützt werden.

Das Ventil (e) im Trübraum (17) und die Kapillare (c) im Stützgewebe dienen der Entlüftung, wobei (c) immer dann von Bedeutung ist, wenn bei der Filtration heißer organischer Lösungen zunächst Lösemitteldämpfe aus der Anlage entfernt werden müßen.

Nachdem im Gleichstrom (vorwiegend, jedoch nicht obligatorisch) (3,17,12,18,18',4') der Filterkuchen gewaschen wurde, erfolgt die Entleerung des Filtratablaufs (18) und die Trocknung des Filterkuchens durch Einspeisung von z.B. heißer Druckluft über Leitung (4), wobei die Luft erzwungenermaßen durch den Zwischenraum (25) -vergl. Fig.8- und den Spalt (12) durch den Filtratablauf (18) austritt und dabei Restanteile von Flüssigkeit in (12,18) mitreisst. Dabei werden auch evtl. Ansätze von Bodenbelag im Spalt (12) -die jedoch bei der erfindungsgemäßen Konstruktion praktisch nicht auftreten- mitgerissen und abgeführt.

Für den Abwurf des nunmehr trockenen Filterkuchens erfolgt die Umschaltung der Druckluft von Leitung (Ventil) (4) auf Ventil (4'), sodaß die Luft nunmehr den Weg (18',18,12,25,17 und 3 oder 4) einnimmt. Der abgetrennte Kuchen kann über den Bodenablaß (2) entfernt werden.

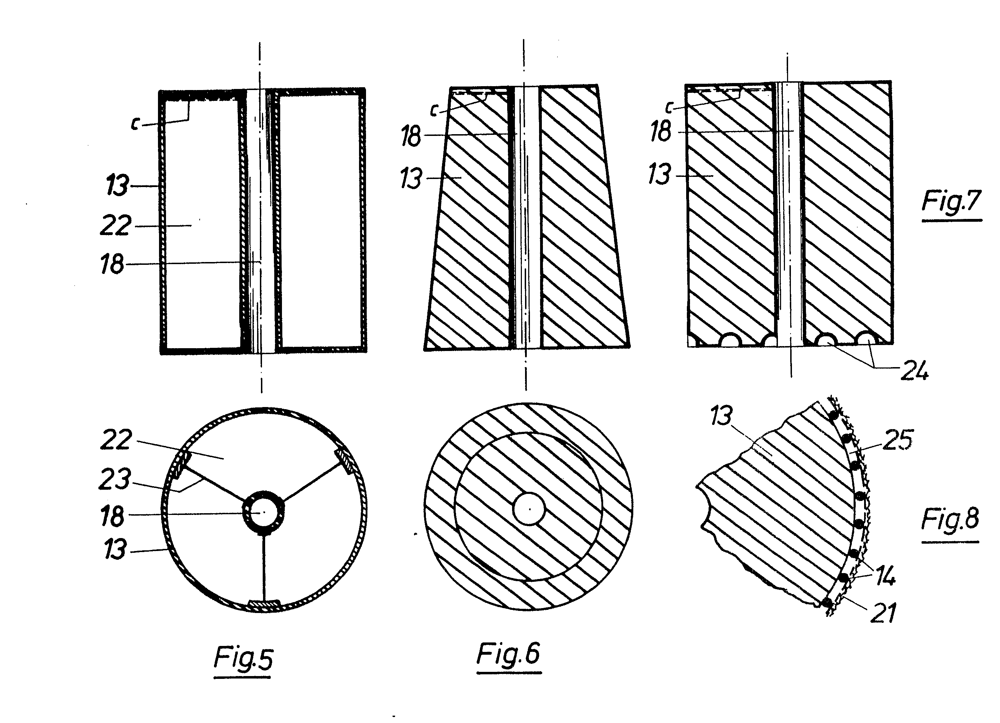

Während der Füllkörper (13) im allgemeinen als Vollkörper mit zentraler Bohrung (18) für die Aufnahme der Tragestange (15) bei gleichzeitiger Bereitstellung des Filtratablaufs ausgebildet ist, kann er gemäß Fig.5 auch als Hohlkörper (22) konstruiert sein, wobei sich bei großvolumigen Füllkörpern der Einbau von Abstandshaltern (23) im Hohlkörper (22) empfiehlt.

0155336

Vorteilhaft ist auch die Ausbildung des Füllkörpers als kegelstumpfförmiger Körper -ob hohl oder voll spielt dabei keine
Rolle- wie dies Fig.6 zeigt. Der Kegelstumpf hat den Vorteil,
daß bei gleicher Grundfläche (Bodenfläche) eine größere Oberfläche erzielt wird, und sich ein vorgefertigtes Stützgitter
in einfachster Weise über die kleinere (obere) Kegelstumpffläche überziehen läßt.

In diesem Zusammenhang sei ausdrücklich gesagt, daß erfindungsgemäß keine Einschränkung auf eine bestimmte geometrische Form
des Füllkörpers besteht, solange die Ausbildung des besagten
Spalts ermöglicht wird und eine ausreichende Filterfläche zur
Verfügung steht. Auch hier gilt die Funktion der Kapillare (c).

So ist es auch möglich, den Spalt (12) -Fig.3- am Boden des
Füllkörpers in Form von radialen Kanälen (24) -Fig.7- auszubilden, sodaß der Füllkörper mit seiner Unterkante auf der stützenden bzw. abschließenden Bodenplatte (26) -Fig.3- aufliegt,
während die Kanäle den Übergang vom Zwischenraum (25) -Fig.8-
zum Filtratablauf (18), also den Spalt (12) bilden.

Es versteht sich, daß hier nur einige Ausführungsformen des
Füllkörpers und damit der Gesamtfilteranlage beispielhaft dargestellt werden können, und daß andere geometrische Formen in
gleichem Maße möglich sind. Entscheidend ist die Ausbildung
einer die Fließgeschwindigkeit der Flüssigkeit am Boden des
Füllkörpers erhöhenden Zone, sodaß die Abscheidung von Feststoffpartikeln nach passieren der filtrierenden Fläche verhindert wird. Umgekehrt kann mit einer hohen (Trocken-)Gasgeschwindigkeit beim Vorgang der Entleerung des Filtratablaufs
und der Trocknung des Filterkuchens jeglicher Anteil an Rest-

C155336

flüssigkeit einschließlich evtl. Schmutzanteile im Spalt ausgetrieben werden.


Durch den Einsatz des erfindungsgemäßen Füllkörpers und dessen
Dimensionierung kann naturgemäß auch die verfügbare Filteroberfläche, und damit die Fläche zur Ausbildung des Filterkuchens,
beliebig variiert werden.

Die Fließgeschwindigkeit des Filtrats im Spalt (12) stellt -wie
leicht erkennbar- eine Funktion des Durchmessers der Füllkörper-
Unterkante (am Spalt) dar, d.h., es wird durch die Wahl der verfügbaren Fläche neben der Erhöhung der Fließgeschwindigkeit auch
die Leistung des Filters, d.h. seine Kapazität erheblich beeinflußt. Je höher die Fließgeschwindigkeit, um so größer ist die
Filterleistung. Spaltfläche (Durchmesser der Füllkörper-Unterkante) und Spalthöhe stellen somit entscheidende Wirkungsfaktoren für die Reinheit des Filtrats und die Produktivität des Filters dar.

Im Hinblick auf die Figuren 3 - 8 sei auch hier erwähnt, daß nur
jeweils eine "Filterkerze" im Trübraum dargestellt ist, daß aber
in einem technischen System eine beliebige Anzahl derartiger
Kerzeneinheiten anwensend sein können.

Bezüglich des Materials für die Füllkörper gibt es keine Einschränkungen, solange die Erfordernisse einer ausreichenden
mechanischen und chemischen (korrosionsfesten) Stabilität erfüllt
werden. Dies gilt natürlich auch für die Stützelemente bzw. Abstandshalter (14), das Filtergewebe (21) usw.


Während die neue Filtereinheit praktisch für alle Filtrationsprobleme, die bisher mit Kerzenfiltern -bei Vernachlässigung

0155336

des immer wieder beobachteten Nachtrübungseffekts durch am Boden der Kerzen angesammelte Trübstoffpartikel- durchgeführt werden, hervorragend geeignet ist, und grundsätzlich vollkommen blankes Filtrat schon nach kürzester Anschwemmperiode liefert, ist sie von größter Bedeutung bei der Filtration sogenannter Miscella, die bei der Extraktion von Saatgut mit Hilfe organischer Lösemittel wie Hexan usw. anfällt und einen erheblichen Anteil an Ölen und Fetten enthält. Derartige Miscella ist in besonderem Maße durch feinstteilige Trübstoffe verunreinigt und im allgemeinen nur unter erheblichem Aufwand für vielfaches Umwälzen, Filterhilfsmittel und äußerst kurze Standzeiten zu reinigen. Hier hat die Erfindung erhebliche Erfolge zu verzeichnen, indem der Filtrationsprozess insgesamt zeitlich verkürzt, die Kapazität von Kerzenfiltern vergleichbarer Oberflächen erhöht, und ein absolut blankes Filtrat auch dann erhalten wird, wenn die Menge an Filterhilfsmittel gesenkt wird.

Besonders geeignet ist die hier definierte Filtereinheit auch in einem Verfahren und Vorrichtung zur Reinigung von Filterelementen, insbesondere von Filterkerzen, wie in der EP 84102502 beschrieben, wobei der Filterkuchen durch Druckentspannung zwischen dem Trübekessel und einer einen niedrigeren Druck aufweisenden Vorlage spontan abgeworfen und in der Vorlage aufgefangen wird.

0155336

Patentansprüche

1. Kerzenfiltereinheit, bestehend aus dem eigentlichen Filterbehälter bzw. Trübekessel (1), dem vorwiegend im unteren Bereich desselben vorgesehenen Trübezulauf (3), der eigentlichen
   Filterkerze (6) mit in bekannter Weise aufgebauter Oberfläche
   aus perforiertem oder gelochtem Behältermaterial, Stütz- und
   Filtergewebe, geschlossenem Ober- und Unterteil (7,8) und im
   Innern zentral angeordnetem Auslaufrohr (5) für das Filtrat,
   Sammelrohr für den Filtratauslauf aus den einzelnen Kerzen,
   vorwiegend im oberen Bereich des Filterbehälters (1) angeordnetem Anschluß (4) für Spülmedium und/oder gasförmiges Trockenmedium für die Austreibung von Restfiltrat und Trocknung des
   Filterkuchens,
   dadurch gekennzeichnet, daß das Auslaufrohr (5) bis nahezu
   zum Boden der Kerze(n) reicht und dabei zwischen seiner untersten Kante und dem Boden (11) der Kerze einen Spalt (12) ausbildet durch den das ablaufende Filtrat und das eingeführte
   Trockenmedium eine Geschwindigkeitserhöhung erfahren.

2. Kerzenfiltereinheit nach Anspruch 1,
   dadurch gekennzeichnet, daß der Spalt (12) eine Höhe im Bereich
   von wenigen mm bis max. 5 cm besitzt.

3. Kerzenfiltereinheit nach Anspruch 1,
   dadurch gekennzeichnet, daß die Höhe des Spalts (12) stufenlos
   einstellbar ist.

4. Kerzenfiltereinheit nach Anspruch 3,
   dadurch kegennzeichnet, daß die Höheneinstellung des Spalts
   (12) durch vertikale Verschiebung des Rohrs (5) erfolgt.

5. Filtereinheit für Anschwemmfiltration nach Art von Kerzenfiltern, bestehend aus einem Filterbehälter bzw. Trübekessel (1), dem vorwiegend im unteren Bereich desselben vorgesehenen Trübezulauf (3), der den Trübraum (17) vom Klarfiltratraum (18') trennenden Tragplatte (16), die auch zum Tragen einzelner Filterelemente dient,      kerzenförmigen Filterelementen (13) mit zentralem Filtratablauf (18), sowie Filtrat-Abnahmeleitung (4') und Filterkuchenaustritt (2),

dadurch gekennzeichnet, daß die Filterelemente (13) als Füllkörper mit glatter Oberfläche ausgebildet sind, deren innere Bohrung (18) zugleich den Filtratablauf in den Klarfiltratraum (18') ausführt, daß die Filterelement-Füllkörper (13) bis nahezu zur Bodenabstützung bzw. Bodenverschlußplatte (26) reichen, die über geeignete Dichtelemente mit der Unterkante der Filterelement-Füllkörper (13) abdichtend verbunden ist, und der Abstand der unteren, horizontalen Bodenfläche der Filterelement-Füllkörper (13) von der Oberseite der Bodenverschlußplatte (26) unter Ausbildung eines Spalts ( 12) gehalten ist, durch den das die Filteroberfläche (14,21) passierende Filtrat und ein ggf. verwendetes gasförmiges Filtrataustreib- und Filterkuchentrocknungs-Medium eine Geschwindigkeitserhöhung erfahren.

6. Filtereinheit nach Anspruch 5,
dadurch gekennzeichnet, daß der Füllkörper (13) als Vollkörper ausgebildet ist.

7. Filtereinheit nach Anspruch 5,
dadurch gekennzeichnet, daß der Füllkörper (13) als Hohlkörper ausgebildet ist.

8. Filtereinheit nach Anspruch 6 oder 7, dadurch gekennzeichnet, daß der Füllkörper (13) als Kegelstumpf ausgebildet ist.

9. Filtereinheit nach Anspruch 8, dadurch gekennzeichnet, daß der Füllkörper an der Unterkante mit radialen Kanälen (24) ausgestattet ist.

10. Filtereinheit nach Ansprüchen 5 bis 9, dadurch gekennzeichnet, daß der Füllkörper (13) am oberen Ende eine Druckausgleichs-Kapillare (c) aufweist.

11. Filtereinheit nach Ansprüchen 5 bis 10, dadurch gekennzeichnet, daß die Zufuhr des gasförmigen Austreib- und Trockenmediums in den oberen Bereich des Trübraums (17) über ein Ventil (4) unterhalb der Tragplatte (16) erfolgt.

12. Filtereinheit nach Ansprüchen 5 bis 11, dadurch gekennzeichnet, daß die Höhe des Spalts (12) stufenlos einstellbar ist.

13. Filtereinheit nach Anspruch 12, dadurch gekennzeichnet, daß die Geschwindigkeit des Filtrats und des gasförmigen Mediums im Spalt (12) durch die Höhe des Spalts (12), bzw. den Abstand der unteren Fläche des Füllkörpers (13) von der Bodenverschlußplatte (26) eingestellt wird.

14. Verfahren zur Durchführung von Filtrationen an Filterkerzen wobei die Trübe zunächst in einen Trübraum eingelassen wird und unter einem vorgegebenen Druck, insbesondere Förder- bzw. Pumpendruck die Filterfläche durchströmt und als Filtrat abgezogen wird, während sich gleichzeitig auf der Filteroberfläche ein sogenannter Filterkuchen aus partikuliertem Trübematerial, Schwebstoffen, sonstigen Verunreinigungen und ggf. Filterhilfsmitteln aufbaut, der nach einer ggf. vorausgegangenen Wäsche und Spülung durch ein gasförmiges Medium getrocknet und abgeworfen wird, dadurch gekennzeichnet, daß die Filterkerze als Füllkörper mit glatter, d.h. nicht gelochter Oberfläche vorliegt, wobei die Oberfläche der Kerze mit Abstandshaltern für ein Filtergewebe versehen ist, das klare Filtrat im Zwischenraum zwischen Kerzenoberfläche und Filtergewebe in einen zusammen mit einer Bodenplatte und der Bodenfläche des Füllkörpers gebildeten Spalt abfließt, hier eine Geschwindigkeitserhöhung erfährt und über einen zentralen, im Füllkörper vorhandenen Auslauf (Bohrung) in den Filtratraum abfließt, daß im Anschluß an die Beendigung der Filtration und einer ggf. erforderlichen Wäsche des Filterkuchens ein denselben trocknendes gasförmiges Medium in den Trübraum unter Druck eingespeist wird und durch den Filterkuchen und den Zwischenraum zwischen der Füllkörper-Oberfläche und Filtergewebe, den bezeichneten Spalt und den Filtratauslauf unter gleichzeitiger Austreibung von im Spalt und dem Filtratauslauf vorhandener Flüssigkeit und evtl. Trübstoffe geführt wird.

15. Verwendung der Vorrichtung nach Ansprüchen 1 - 12 und Anwendung des Verfahrens nach Anspruch 13 bei der Filtration von Miscella aus der Ölextraktion mit Hilfe organischer Lösemittel.

16. Verwendung der Filtereinheit nach Ansprüchen 1 - 12 in einer Filtrationsanlage nach EP-Anmeldung 84 102 502.

0155336

1/3

_Fig.1_

_Fig.2_

_Fig.2a_

0155336

_Fig.3_

_Fig.4_

Fig.5

Fig.6

Fig.7

Fig.8

**0155336**

Nummer der Anmeldung

**Europäisches Patentamt**

## EUROPÄISCHER RECHERCHENBERICHT

EP  84 10 3332

### EINSCHLÄGIGE DOKUMENTE

| Kategorie | Kennzeichnung des Dokuments mit Angabe, soweit erforderlich, der maßgeblichen Teile ' | Betrifft Anspruch | KLASSIFIKATION DER ANMELDUNG (Int Cl. ³) |
|---|---|---|---|
| Y | DE-A-2 039 553  (ARCELLI ALBERTO) <br> * Seiten 7-12 * | 1 | B 01 D  29/14 <br> B 01 D  29/42 <br> B 01 D  29/38 <br> B 01 D  37/02 |
| A | --- | 5,14 | |
| Y | FR-A-1 152 584  (THE PATERSON ENGINEERING) <br> * Seiten 1-3 * <br> --- | 1,5,11 ,14 | |
| A | US-A-3 841 488  (H.A. YESSAIAN) <br><br> * Spalten 2-4 * <br> --- | 1,2,3, 4,5,12 ,13 | |
| A | US-A-3 240 347  (J.F. ZIEVERS) <br> * Spalten 2-6 * <br> --- | 6 | **RECHERCHIERTE SACHGEBIETE (Int. Cl. ³)** |
| A | CH-A-  462 112  (OTTO KÖNZLI) <br> * Spalten 2-3 * <br> --- | 7 | B 01 D |
| A | US-A-3 945 925  (CH.B. NICHOLSON) <br> * Spalten 2-4 * <br> --- | 8 | |
| A | US-A-4 152 264  (J.W. HANNA) <br><br> --- | | |
| A | FR-A-  480 832  (DELATTRE) <br><br> ----- | | |

Der vorliegende Recherchenbericht wurde für alle Patentansprüche erstellt.

| Recherchenort | Abschlußdatum der Recherche | Prüfer |
|---|---|---|
| DEN HAAG | 08-10-1984 | DE PAEPE P.F.J. |